# EUROPEAN PATENT SPECIFICATION

(11) **EP 2 898 420 B1**
(45) Date of publication and mention of the grant of the patent: **09.01.2019**
(21) Application number: 13839241.0
(22) Date of filing: 10.07.2013
(51) Int. Cl.: G06F 15/16, H04L 12/58

(54) **A DATA-SHARING METHOD, TERMINAL, SERVER, AND SYSTEM**
GEMEINSAMES DATENNUTZUNGSVERFAHREN, ENDGERÄT, SERVER UND SYSTEM
PROCÉDÉ, TERMINAL, SERVEUR ET SYSTÈME DE PARTAGE DE DONNÉES

(30) Priority: 21.09.2012 CN 201210355338
(43) Date of publication of application: 29.07.2015
(73) Proprietor: Tencent Technology (Shenzhen) Company Limited, Shenzhen, Guangdong 518044 (CN)
(72) Inventor: LUO, Wenlong, Shenzhen Guangdong 518044 (CN); CHEN, Tian, Shenzhen Guangdong 518044 (CN); JIANG, Qian, Shenzhen Guangdong 518044 (CN); XIAO, Xiao, Shenzhen Guangdong 518044 (CN)
(74) Representative: Epping - Hermann - Fischer
(86) International application number: PCT/CN2013/079110
(87) International publication number: WO 2014/044075

(56) References cited:
- EP-A1- 1 980 949
- CN-A- 102 916 866
- US-A1- 2003 154 250
- US-A1- 2007 078 938
- US-A1- 2009 006 623

## Description

### Cross Reference to Related Application

This application claims the priority benefit of Chinese Patent Application No. 201210355338.x, filed on September 21, 2012.

### Field

This relates generally to the field of communication, and in particular, to a data-sharing method, terminal, server, and system.

### Background

As computer and network technologies develop, more and more different types of devices are used by small businesses or at public places. For example, there may be a number of smartphones, personal desktop PCs, laptop PCs, smart TVs, laptop PCs or other devices connected to the same local area network (LAN). There is a need for sharing data among these devices. Existing technology typically requires a wire such as a Universal Serial Bus (USB) to connect multiple terminal devices. Alternatively, data files in the multiple terminal devices can be shared by making a copy on a mobile storage medium. There are a lot of limitations and inconvenience with these mechanisms.

Reference US2007/078938 A1 provides a system and method for performing files/folder share between IM clients. In the present invention, when a source client shares out files/folders to a particular contact person/contact person group, an access control list table is established and said particular contact person/contact person group and the files/folders shared out to him are stored in association with each other. When a target client makes a request for accessing information of share items, obtaining items and beginning to receive items, the source client will respectively consult the access control list table to determine whether the request is authorized. Only when the request is authorized, can the source client perform the requesting operations. By means of the present invention, an automatic and flexible file/folder share between IM clients can be achieved.

Reference US2003/154250 A1 discloses that in a service providing system, a client computer displays chat log data received from a server in a log display area and shared information in a shared-information display area. When the chat log data and the shared information, both of which are received from the server, are linked with each other, the client computer displays a link arrow heading from a link word of the chat log data towards a shared-information window displaying the shared information linked with the chat log data.

### Summary

One of the technical problems that can be resolved by the embodiments of the present disclosure is to provide a data-sharing method, terminal, server, and system to allow multiple terminals to have each access of data files from each other.

To resolve this technical problem, an embodiment in the first aspect of the disclosure can provide a data-sharing method including the following exemplary steps.

A first instant messaging terminal and a second instant messaging terminal can each upload their respective gateway device information to a messaging server. The messaging server can determine whether the first instant messaging terminal and the second instant messaging terminal can connect directly to each other. The first instant messaging terminal can obtain the result of the determination from the messaging server. Each of the first instant messaging terminal and the second instant messaging terminal is connected to a local area network including a gateway device. The first instant messaging terminal can transmit a data-sharing request to the second instant messaging terminal, the first instant messaging terminal and the second instant messaging terminal communicating with each other by logging into related accounts of an instant messaging application.

The second instant messaging terminal can respond to the data-sharing request, transmit a reply permitting data sharing, the reply including an ID collection associated with at least one shareable data resource, the ID collection including at least one data resource ID.

The first instant messaging terminal can transmit a data-reading request to the second instant messaging terminal, the data-reading request including at least one data resource ID.

The second instant messaging terminal can transmit to the first instant messaging terminal a data resource corresponding to the at least one data resource ID in the data-reading request.

An embodiment in the second aspect of the disclosure provides a first instant messaging terminal, which can include the following modules.

A terminal interacting module that can interact, via an instant messaging application, with a second instant communication module logged into a related account of the application,
a gateway device information uploading module that uploads gateway device information of the first instant messaging terminal to the messaging server, and
a direct connection determination obtaining module that obtains a determination made by the messaging server regarding whether the first instant messaging terminal and the second instant messaging terminal can connect directly to each other, the determination made based on the gateway device information of the first instant messaging terminal and the second instant messaging terminal.

The first instant messaging terminal is connected to a local area network on which the gateway device is located and the terminal interacting module can include the following units.

A sharing request unit that can transmit a data-sharing request to the second instant messaging terminal.

A response-obtaining unit that can obtain a response permitting data sharing transmitted from the second instant messaging terminal, the response including an ID collection associated with at least one shareable data resources, the ID collection including at least one data resource ID.

A data-requesting unit that can transmit a data-reading request to the second instant messaging terminal, the data-reading request including at least one data resource ID.

A data-obtaining unit that can obtain a data resource transmitted from the second instant messaging terminal, the data resource corresponding to the data resource ID in the data-reading request.

An embodiment in a third aspect of the disclosure provides a second instant messaging terminal, which can include the following modules.

A terminal-interacting module that can interact, via an instant messaging application, with a first instant messaging terminal logged into a related account of the application, and
a gateway device information uploading module that uploads the gateway device information of the second instant messaging terminal to a messaging server, to allow the messaging server to determine, based on the gateway device information of the first instant messaging terminal and the second instant messaging terminal, whether the first instant messaging terminal and the second instant messaging terminal can connect directly to each other.

The second instant messaging terminal is connected to a local area network on which the gateway device is located and the terminal-interacting module can include the following units.

A share request obtaining unit that can obtain a data-sharing request transmitted from the first instant messaging terminal.

A reply transmitting unit that can respond to the data-sharing request and transmit a reply permitting data sharing to the first instant messaging terminal, the reply including an ID collection of at least one shareable data resource, the ID collection of the at least one shareable data resource including at least one data resource ID.

A data request obtaining unit that can obtain a data-reading request transmitted from the first instant messaging terminal, the data-reading request including at least one data resource ID.

A data transmitting unit that can transmit, to the first instant messaging terminal, a data resource corresponding to the data resource ID in the data-reading request.

An embodiment in the fourth aspect of the disclosure provides a messaging server, which can include the following modules.

An interaction-routing module that can route information to facilitate an interaction between the first instant messaging terminal and the second instant communication terminal logged into related accounts,
a gateway device information obtaining module that obtains gateway device information uploaded by the first instant messaging terminal and the second instant messaging terminal, and
a direct connection determination module that determines, based on the gateway device information of the first instant messaging terminal and the second instant messaging terminal, whether the first instant messaging terminal and the second instant messaging terminal can connect directly to each other,
each of the first instant messaging terminal and the second instant messaging terminal is connected to a local area network including a gateway device.

The interaction-routing module can include the following units.

A sharing sharing request routing unit that can forward a data-sharing request transmitted form the first instant messaging terminal to the second instant messaging terminal.

A reply routing unit that can obtain a reply permitting data sharing from the second instant messaging terminal and forward the reply to the first instant messaging terminal, the reply comprising an ID collection of at least one shareable data resource, the ID collection of the at least one shareable data resource including at least one data resource ID.

A data request routing unit that can obtain a data-reading request transmitted from the first instant messaging terminal and forward the data-reading request to the second instant messaging terminal, the data-reading request including at least one data resource ID.

A data routing unit that can obtain the data resource corresponding to the data resource ID in the data-reading request and transmitted from the second instant messaging terminal and forwards the data resource to the first instant messaging terminal.

An embodiment in the fifth aspect of the disclosure provides an instant messaging system for facilitating data sharing. The instant communication system can include the first instant messaging terminal disclosed in the embodiment of the second aspect of the disclosure and the second instant messaging terminal disclosed in the embodiment of the third aspect of the disclosure.

The first instant messaging terminal can transmit a data-sharing request to the second instant messaging terminal; after obtaining a reply permitting data sharing from the second instant messaging terminal, transmit a data-reading request to the second instant messaging terminal, the data-reading request including at least one data resource
ID; and obtain a data resource corresponding to the data resource ID in the data-reading request, the data resource transmitted from the second instant messaging terminal.

The second instant messaging terminal can respond to the data-sharing request and transmit the reply permitting data sharing to the first instant messaging terminal, the reply including at least one shareable data resource ID; obtain the data-reading request transmitted from the first instant messaging terminal; and transmit the data resource corresponding to the data resource ID in the data-reading request to the first instant messaging terminal.

The terminals of the embodiments of the present disclosure can interact with each other by logging into related account of an instant messaging application to facilitate accessing and reading data resources. This can provide a faster and easier way of sharing data among the multiple terminals.

### Brief Description of the Drawings

Fig. 1 is a flowchart illustrating the exemplary steps in a data-sharing method, according to an embodiment of the disclosure.
Fig. 2 is a flowchart illustrating exemplary steps of a data sharing method, according to an embodiment of the disclosure.
Fig. 3 is a flowchart illustrating the exemplary steps of a data-sharing method, according to an embodiment of the disclosure.
Fig. 4 is a block diagram illustrating the exemplary structure of a first instant messaging terminal, according to an embodiment of the disclosure.
Fig. 5 is a block diagram illustrating the exemplary structure of the second instant messaging terminal, according to an embodiment of the disclosure.
Fig. 6 is a block diagram illustrating an exemplary structure of the messaging server, according to an embodiment of the disclosure.
Fig. 7 is a block diagram illustrating an exemplary structure of an instant messaging system for facilitating data sharing, according to an embodiment of the disclosure.
Fig. 8 is a block diagram illustrating an exemplary structure of the instant messaging system, according to another embodiment of the disclosure.
Fig. 9 is block diagram illustrating an exemplary structure of a device control apparatus, according to an embodiment of the present disclosure.

### Detailed Description

The invention is defined by the accompanying set of claims. A detailed description of the technical solutions of the embodiments of the present disclosure is provided below in view of the accompanying drawings. It should be understood that the embodiments described below are representative embodiments of the present disclosure rather than a complete disclosure of the every possible embodiment. The present disclosure can also include any other embodiments that can be derived from these disclosed embodiments by a person with ordinary skill in the art without any additional inventive work. It is to be understood that other embodiments can be used and structural changes can be made without departing from the scope of the embodiments of this disclosure.

This disclosure generally relates to data sharing among multiple terminals using a communication application. As referred hereinafter, terminals can be any electronic device capable of communicating with one or more other terminals over a computer network, preferably, a wireless network, for transmitting and/or receiving data. Such devices can include, but are not limited to, PCs, Macs, desktop computers, laptop computers, tablet PCs, smartphones including iPhones, Android phones, Windows phones, and Blackberries, e-readers, in-car communication devices, televisions, gaming consoles and other consumer electronic devices with sufficient network capabilities. Furthermore, the terms "device" and "terminal" are interchangeable terminologies in this disclosure.

The terminals/devices in the embodiments discussed below can have installed on them and run a communication tool or application (the terms "tool" and "application" are interchangeable terminologies in this disclosure) for communicating with one or more other terminals/devices. The communication tool or application can, for example, be an instant messaging application (e.g., MSN messenger by Microsoft or QQ by Tencent) or any other types of messaging applications. In the embodiments described below, a terminal or device can be referred to as a first instant messaging terminal or a second instant messaging terminal, although it should be understood that the first and second instant messaging terminals are not necessarily terminals dedicated for the purpose of sending and receiving instant messages or any other types of messages. That is, the first and second instant messaging terminals can be any devices such as those listed above. They can be general purpose devices (PCs, iPhones) or devices built for particular purposes, so long as they are capable of communicating with one or more other terminals via a communication application.

To share data, one of the terminals (e.g., the first instant messaging terminal) can log into an account of the communication application, such as an instant messaging application and send a data-sharing request to one or more other terminals (e.g., the second instant messaging terminal) requesting to share data one the one or more other terminals. The request and some, if not all, of the communications between the terminals can be through the communication application. The second instant messaging terminal (and/or other terminals) can also be logged into an account of the communication application to receive the request and other communications from the first instant messaging terminal. In some embodiment, the accounts logged into by the requesting terminal (e.g., first instant messaging terminal) and the receiving terminal (e.g., second instant messaging terminal) can be the same account. For example, a user may have two devices (e.g., an iPhone and a MAC), both running an instant messaging application. The user can be logged into the same instant messaging account on both of these devices to share data on one of the devices with the other device. Alternatively, the terminals can log into different, but related accounts of the communication application. The related accounts can be accounts that are designed as "friends" with respect to each other or are members of the same public or private group. This allows friends and/or users in the same social group to share data from their respective devices using the methods, terminals, and systems disclosed herein.

In the various embodiments discussed below. The same terminal can be both a terminal requesting data from another terminal and a terminal from which data can be requested. Data stored on a terminal can be referred to as one or more data resources. A data resource can include any type of data, such as image, text, audio, video, and any other multimedia data stored on a user device. The second instant messaging terminal, after receiving the data-sharing request, can send a reply back to the first instant messaging terminal either granting or denying the request. If the request is granted, the second instant messaging terminal can also send one or more IDs identifying one or more data resources on the second instant messaging terminal that are available for sharing. The IDs can be included in the reply and transmitted to the first instant messaging terminal via the communication application. The IDs of the available data resources can then be displayed on the first instant messaging terminal to allow the user to select the desirable data resource(s) to be obtained from the second instant messaging terminal. The first instant messaging terminal can then send a data-reading request including the selected data resource IDs to the second instant messaging terminal. Based on these IDs, the second instant messaging terminal can transmit the corresponding data resources to the first instant messaging terminal. The data-reading request and/or the corresponding data resources can also be transmitted via the communication application. Alternatively, the data resources can, for example, be transmitted via a different application. In some embodiments, the data can be automatically displayed using a suitable application on the first instant messaging terminal when it is received. For example, a data resource that is a video clip can be automatically played using a multimedia application on the terminal.

As described in the embodiments below, in operation, the terminals (e.g., the first and second instant messaging terminal) can be connected to each other via a network. The network can be any computer network such as the Internet, a LAN, wide area network (WAN), cellular network, Wi-Fi network, and virtual private network (VPN). Preferably, the connection can be wireless in some embodiments.

In some embodiments, the terminals can connect to each other directly and communicate with each other without going through a server. For example, when the terminals can connect to each other directly when they are connected to the same network, (e.g., the same LAN or Wi-Fi spot) or when they are connected directly to each other via, for example, a Bluetooth connection. If the terminals cannot connect to each other directly, they can communicate through a messaging server (e.g., an instant messaging server such as a QQ server provided by Tencent for supporting the QQ instant messaging application). For example, when the first and second instant messaging terminals are connected to two different networks (e.g., LANs) or direct communication is block by a firewall, some or all of the communications between the first and second instant messaging terminals can be routed through a messaging server. In some embodiments, to determine whether two or more terminals can connect to each other directly, each of the terminals can upload their gateway device information to a server, which can then determine, based on the gateway device information, whether the terminals can connect to each other directly.

In some embodiments, if the communication application is not in an active mode on a terminal (e.g., if the application is running in the background while another application is running in the foreground), the messaging server may first send a message (e.g., a push message) to the terminal to activate the communication application (e.g., move it to the foreground) before forwarding a data request to the terminal. This can request the messaging server to obtain an operating status of the communication application on the terminal before forwarding any communication to the terminal.

In the embodiments of the present disclosure, an instant messaging terminal can be a personal computer (PC), mobile phone, tablet PC, smartphone, e-reader, laptop computer, in-car terminal, or any other network-enabled device.

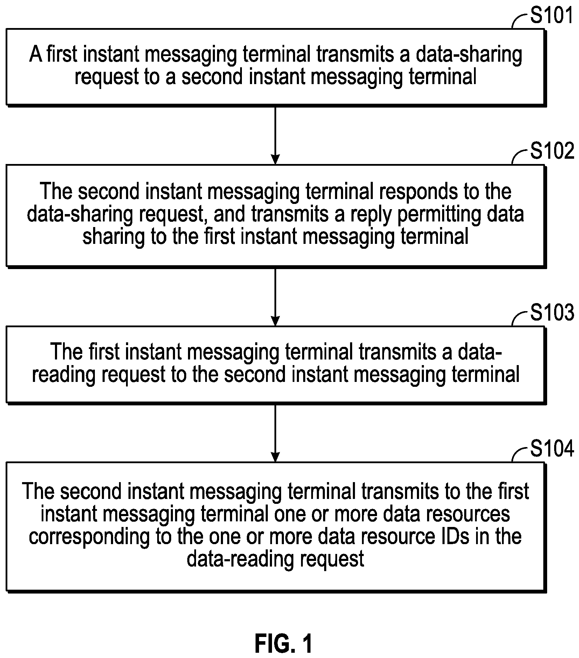

Fig. 1 is a flowchart illustrating the exemplary steps in a data-sharing method, according to a first embodiment of the disclosure. The data-sharing method in the illustrated embodiment can include the following steps.

S101: A first instant messaging terminal can transmit a data-sharing request to a second instant messaging terminal. The first instant messaging terminal and the second instant messaging terminal can interact with each other by logging into related accounts of an instant messaging application. In particular, in this embodiment, the first instant messaging terminal and the second instant messaging terminal can be two network devices on the same LAN. The terminals can discover each other as terminals logged into the related accounts on the LAN by having one of the terminals broadcasting a discovery message over the LAN. The related accounts can be friends with respect to each other or members of a particular group. They can also be the same instant messaging account logged in at different terminals.

S102: The second instant messaging terminal can respond to the data-sharing request, and transmit a reply permitting data sharing to the first instant messaging terminal. The reply permitting data sharing can include an ID collection of one or more shareable data resources. In particular, the second instant messaging terminal, after receiving the data-sharing request, can display a message prompting whether or not to grant the data-sharing request. It can respond to the data-sharing request based on a user input selection. If the user chooses to reject the request, the second instant messaging terminal can send a reply to the first instant messaging terminal rejecting the request and the process can end. If the user chooses to allow data sharing, the second instant messaging terminal can send a reply to the first instant messaging terminal granting the request. The reply granting data sharing can include an ID collection of one or more shareable data resources, which can include at least one data resource ID. The data resource ID can be an ID of a data resource at the second instant messaging terminal that can be shared with the first instant messaging terminal or any other terminals. The user can manually designate a data resource, a type of data resources, or a folder of data resources as shareable data resources. The second instant messaging terminal can generate a corresponding data resource ID of a shareable data resource. The data resource ID can be of a format including, for example, the name, abstract, attribute, or thumbnail associated with the data resource. The ID collection of the one or more shareable data resources can include a list including multiple data resource IDs.

S103: The first instant messaging terminal can transmit a data-reading request to the second instant messaging terminal. The data-reading request can include at least one data resource ID. In particular, after the first instant messaging terminal receives the reply from the second instant messaging terminal, the first instant messaging terminal can display the ID collection of the one or more shareable data resources in the reply to prompt a user at the first instant messaging terminal to select one or more desirable data resources to be obtained. After receiving a selection command from the user, the first instant messaging terminal can transmit a data-reading request to the second instant messaging terminal. The data-reading request can include at least one data resource ID.

S104: The second instant messaging terminal can transmit to the first instant messaging terminal one or more data resources corresponding to the one or more data resource IDs in the data-reading request. This can allow the first instant messaging terminal to obtain data via an instant messaging application from the second instant messaging terminal logged into a related account.

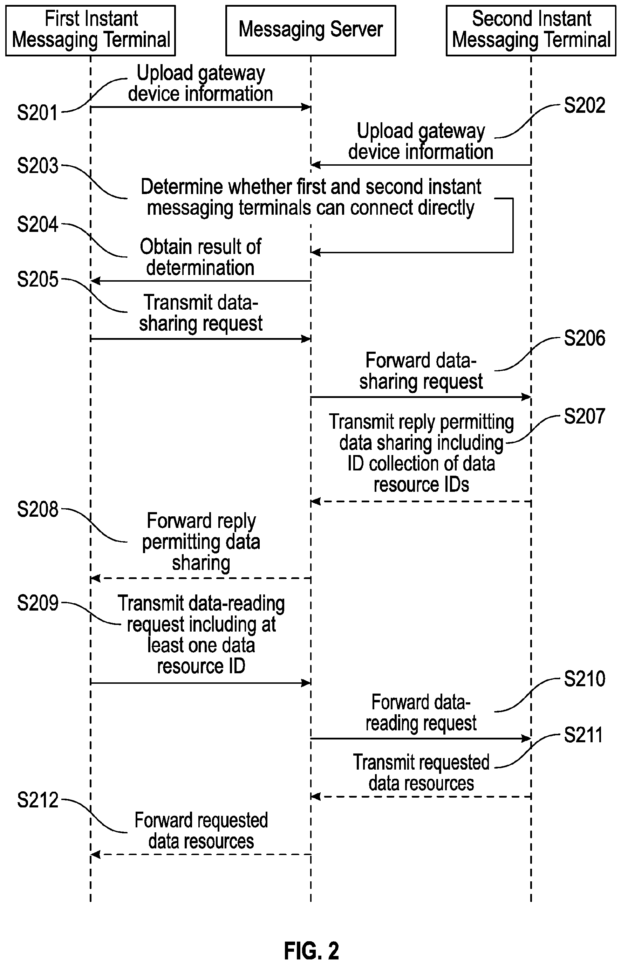

Fig. 2 is a flowchart illustrating exemplary steps of a data sharing method, according to a second embodiment of the disclosure. In this embodiment, the first instant messaging terminal and the second instant messaging terminal logged into a related account are not connected to the same LAN. The terminals can discover each other through a server. The illustrated instant messaging method in this embodiment can include the following process.

S201, S202: The first instant messaging terminal and the second instant messaging terminal can each upload their respective gateway device information to a messaging server. In operation, the first instant messaging terminal and the second instant messaging terminal can transmit their respective gateway device information to the messaging server on a regular basis using an instant messaging application after logging into their instant messaging accounts. The gateway device information can include unique identification information (e.g., MAC addresses) of the gateway devices (e.g., routers) of the first and second instant messaging terminals on their respective LANs or their respective IP addresses on a public network.

S203: The messaging server can determine whether the first instant messaging terminal and the second instant messaging terminal can connect directly to each other. In operation, the messaging server can determine, based on the gateway device information of each terminal, whether the two terminals belong to the same LAN. If they do, it can be determined that the two terminals can connect directly with each other.

S204: The first instant messaging terminal can obtain the result of the determination from the messaging server. In operation, when the user needs to transfer an instant messaging screen from the first instant messaging terminal to the second instant messaging terminal, the determination of whether the first instant messaging terminal and the second instant messaging terminal can connect directly with each other can be first obtained. When the first instant messaging terminal and the second instant messaging terminal can connect directly with each other, steps S101-S104 in the first embodiment can be executed. When the first instant messaging terminal and the second instant messaging terminal cannot connect directly, S205 below can be executed.

S205: The first instant messaging terminal can transmit to the messaging server a data-sharing request directed to the second instant messaging terminal.

S206: The messaging server can forward the data-sharing request from the first instant messaging terminal to the second instant messaging terminal.

S207: The second instant messaging terminal can respond to the data-sharing request and transmit a reply permitting the request to the messaging server. The reply permitting data sharing can include an ID collection of one or more shareable data resources. In particular, the second instant messaging terminal, after receiving the data-sharing request, can display a message prompting whether or not to grant the data-sharing request. It can respond to the data-sharing request based on a user input selection. If the user chooses to reject the request, the second instant messaging terminal can send a reply to the first instant messaging terminal rejecting the request. If the user chooses to allow data sharing, the second instant messaging terminal can send a reply to the first instant messaging terminal granting the request. The reply permitting data sharing can include an ID collection of one or more shareable data resources, which can include at least one data resource ID. The data resource ID can be an ID of a data resource at the second instant messaging terminal that can be shared with the first instant messaging terminal or any other terminals. The user can manually set a data resource, a type of data resources, or a folder of data resources as shareable data resources. The second instant messaging terminal can generate a corresponding data resource ID based on a shareable data resource. The data resource ID can be of a format including, for example, the name, abstract, attribute, or thumbnail associated with the data resource. The ID collection of shareable data resources can include a list including multiple data resource IDs.

S208: The messaging server can forward the reply permitting data sharing from the second instant messaging terminal to the first instant messaging terminal.

S209: The first instant messaging terminal can transmit to the messaging server a data-reading request directed to the second instant messaging terminal. The data-reading request can include at least one data resource ID. In particular, the first instant messaging terminal, after receiving the reply from the second instant messaging terminal, can display the ID collection of the one or more shareable data resources in the reply to prompt the user at the first instant messaging terminal to select one or more data resources to be obtained. After receiving a selection command from a user, the first instant messaging terminal can transmit a data-reading request to the messaging server. The data-reading request can include at least one data resource ID selected by the user.

S210: The messaging server can forward the data-reading request from the first instant messaging terminal to the second instant messaging terminal.

S211: The second instant messaging terminal can transmit to the messaging server one or more data resources corresponding to the at least one data resource ID in the data-reading request.

S212: The messaging server can forward the at least one data resource transmitted from the second instant messaging terminal to the first instant messaging terminal. This can allow the first instant messaging terminal to obtain one or more data resources from the second instant messaging terminal by routing information through the messaging server, when the first instant messaging terminal and the second instant messaging terminal cannot connect directly to each other.

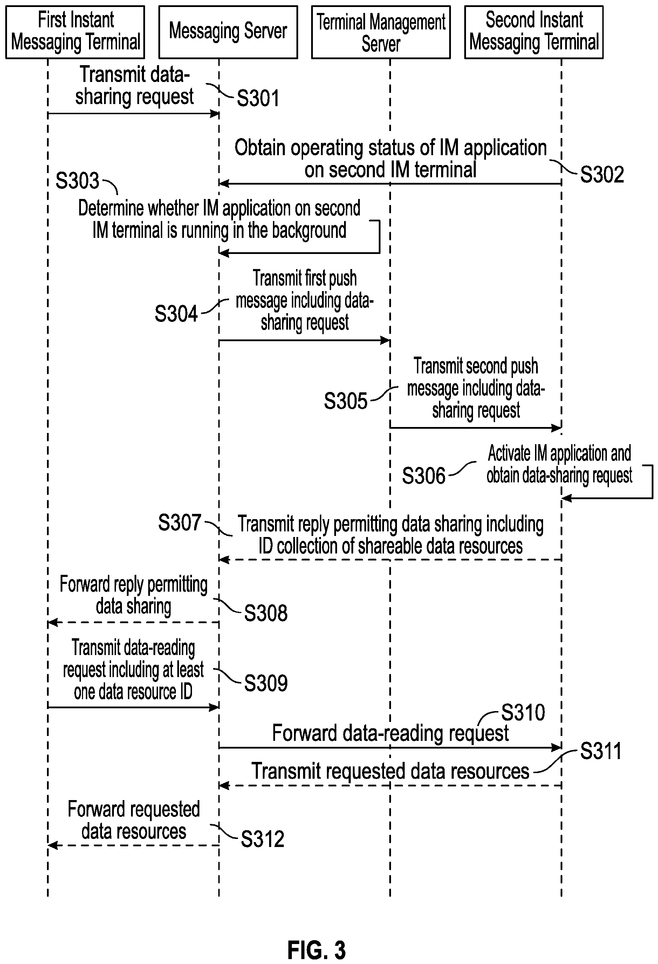

Fig. 3 is a flowchart illustrating the exemplary steps of a data-sharing method, according to a third embodiment of the disclosure. The illustrated data-sharing method of this embodiment can include the following steps.

S301: A messaging server can obtain, from a first instant messaging terminal, a data-sharing request directed to a second instant messaging terminal. In particular, because both the first instant messaging terminal and the second instant messaging terminal can be both logged into their respective instant messaging accounts, the data-sharing request transmitted from the first instant messaging terminal to the second instant messaging terminal using the instant messaging application can be obtained by the messaging server. The instant messaging application can be running in the background at the second instant messaging terminal. Therefore, it may not obtain the data-sharing request directly from the first instant messaging terminal and, instead, requires the messaging server to obtain and then forward the data-sharing request.

S302: The messaging server can obtain the operation status information of the instant messaging application at the second instant messaging terminal. In operation, the second instant messaging terminal can transmit the operation status information of its instant messaging application to the messaging server on a regular basis. Alternatively, it can also transmit the operating status information of its instant messaging application to the messaging server when there is a change to the operating status of the instant messaging application to notify the messaging server about the latest operating status.

S303: The messaging server can determine whether the instant messaging application at the second instant messaging terminal is running in the background. In operation, after the messaging server obtains, from the first instant messaging terminal, the data-sharing request directed to the second instant messaging terminal, the messaging server can determine, based on the latest operating status information of the instant messaging application uploaded from the second instant messaging terminal, whether the instant messaging application at the second instant messaging terminal is running in the background. When it is determined that the instant messaging application at the second instant messaging terminal is not running in the background, the messaging server can proceed as described in the previous two embodiments to process the data-sharing request. For example, it can determine whether the first instant messaging terminal and the second instant messaging terminal can connect directly with each other based on the gateway device information of the first and second instant messaging terminals. If they can, the data-sharing request can arrive at the second instant messaging terminal directly, and then the remaining process described in the first embodiment can be carried out. If the first instant messaging terminal and the second instant messaging terminal cannot connect directly, the messaging server can forward the received data-sharing request to the second instant messaging terminal to execute the process described in the second embodiment. When it is determined that the instant messaging application at the second instant terminal is running in the background, step S304 can be carried out.

S304: The messaging server can transmit to a terminal management server associated with the second instant messaging terminal a first push message including the data-sharing request. The terminal management server associated with the second instant messaging terminal can be, for example, an Apple terminal management server. The messaging terminal can transmit the first push message including the data-sharing request to the Apple terminal management server, requesting the Apple terminal management server to wake up a second instant messaging terminal under its management. The second instant messaging terminal can include, for example, an iPhone or iPad (i.e., smartphones and tablet PCs from Apple, both using iOS system)

S305: The terminal management server associated with the second instant messaging terminal can transmit a second push message including the data-sharing request to the second instant messaging terminal based on the first push message transmitted from the messaging server.

S306: The second instant messaging terminal can activate its instant messaging application in response to receiving the second push message and obtain the data-sharing request from the second push message.

S307-S312 can be the same as S207-S212 of the above-described second embodiment, respectively.

This embodiment can resolve the problem when the instant messaging application at the second instant messaging terminal is running in the background and cannot receive the data-sharing request from the first instant messaging terminal.

The embodiments of the disclosure also disclose a non-transitory computer-readable medium storing a program, when executed, can perform some or all of the steps in the embodiments disclosed above in view of Figs. 1-3.

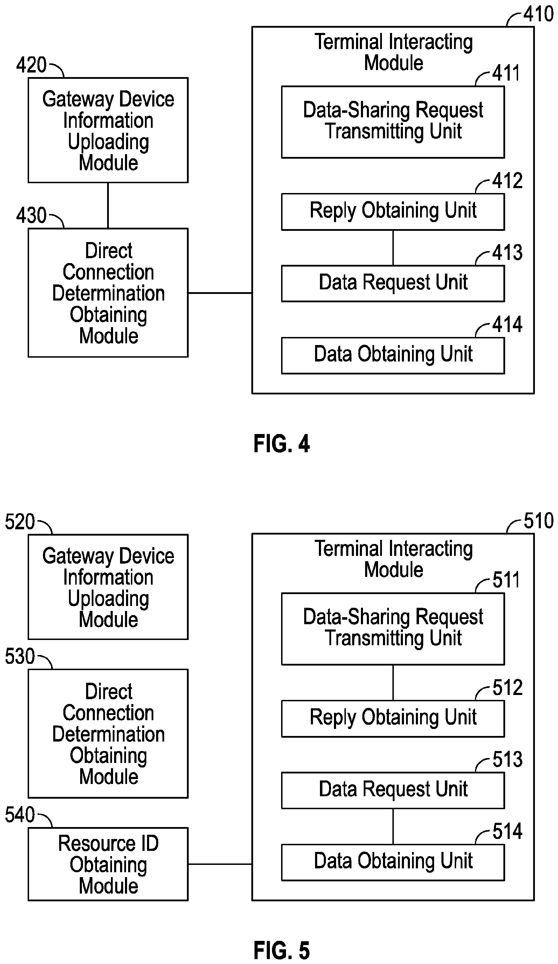

Fig. 4 is a block diagram illustrating the exemplary structure of a first instant messaging terminal, according to an embodiment of the disclosure. The first instant messaging terminal in this embodiment can be a PC, mobile phone, tablet PC, smartphone, e-reader, laptop PC, in-car terminal or other network-enabled device. The first instant messaging terminal, as illustrated, can include at least the following components.

A terminal interacting module 401 that can interact with a second instant messaging terminal logged into a related account via an instant messaging application. In particular, the related account can be of an account of a friend or another member of a particular common group. It can also be the same account logged into at a different instant messaging terminal. The terminal interacting module 410 can interact with the second instant messaging terminal directly or by routing information through a messaging server. For example, in this embodiment, when the first instant messaging terminal and the second instant messaging terminal have already discovered each other, the terminal interacting module 410 can interact with the second instant messaging terminal directly. Alternatively, the first instant messaging terminal can obtain from the messaging server the result of determining whether a direct connection to the second instant messaging terminal can be established. Based on the result, it can then be determined whether the terminal interacting module 410 can interact directly with the second instant messaging terminal or it has to interact with the second instant messaging terminal by routing information through the messaging server.

The terminal interacting module can include the following units.

A sharing request transmitting module 411 that can transmit a data-sharing request to the second instant messaging terminal.

A reply obtaining unit 412 that can obtain a reply permitting data sharing from the second instant messaging terminal. The reply can include an ID collection of one or more shareable data resources. The ID collection of the shareable data resources can include at least one data resource ID. In particular, after the second instant messaging terminal receives the data-sharing request from the sharing request transmitting unit 411, the second instant messaging terminal can display information prompting whether to grant the data sharing request. The second instant messaging terminal can choose whether or not to grant the data sharing request based on user input. If the user chooses not to grant the request, the second instant messaging terminal can transmit, to the first instant messaging terminal, a reply denying the data-sharing request. If the user chooses to accept the request, the second instant messaging terminal can transmit, to the first instant messaging terminal, a reply permitting the data-sharing request. The reply obtaining module 412 can then obtain the reply permitting the sharing request transmitted from the second instant messaging terminal. The reply permitting the sharing request can include an ID collection of the one or more shareable data resources, which includes at least one data resource ID. A data resource ID can be an identification of a data resource at the second instant messaging terminal that can be shared with the first instant messaging terminal or any other terminals. The user can manually set a data resource, a type of data resources, or a folder of data resources as shareable data resources. The second instant messaging terminal can generate a corresponding data resource ID based on a shareable data resource. The data resource ID can be of a format including, for example, the name, abstract, attribute, or thumbnail associated with the data resource. The ID collection of shareable data resources can include a list including multiple data resource IDs.

A data request unit 413 that can transmit a data-sharing request to the second instant messaging terminal. The data-reading request can include at least one of the data resource ID. In particular, after the reply obtaining unit 412 receives the reply from the second instant messaging terminal, the first instant messaging terminal can display the ID collection of the shareable data resources in the reply to prompt a user at the first instant messaging terminal to select one or more desirable data resources to be obtained. After receiving a selection command from the user, the data request unit 413 can transmit a data-reading request to the second instant messaging terminal. The data-reading request can include at least one data resource ID.

A data obtaining unit 414 that can obtain the one or more data resources corresponding to the one or more data resource IDs in the data-reading request, the one or more data resources transmitted from the second instant messaging terminal.

Optionally, the first instant messaging terminal can further include the following modules.

A gateway device information uploading module 420 that can upload gateway device information of the first instant messaging terminal to the messaging server. In particular, the gateway device information of the first instant messaging terminal can include unique identification information (e.g., MAC addresses) of the gateway devices (e.g., routers) of the first and second instant messaging terminals on their respective LANs or IP addresses on a public network.

A direct connection determination obtaining module 430 that can obtain the determination regarding whether the first instant messaging terminal and the second instant messaging terminal can connect directly to each other. In operation, the messaging server can determine, based on the gateway device information of each terminal, whether the two terminals belong to the same LAN. If so, it can be determined that the two terminals can interact directly with each other. The direct connection determination obtaining module 430 can obtain from the server the result of whether the first instant messaging terminal and the second instant messaging terminal can connect directly to each other. When the first instant messaging terminal and the second instant messaging terminal can connect directly, the terminal interacting module 410 can interact with the second instant messaging terminal directly. When the first instant messaging terminal cannot connect directly to the second instant messaging terminal, the terminal interacting module 410 can interact with the second instant messaging terminal by routing information through a messaging server.

Fig. 5 is a block diagram illustrating the exemplary structure of the second instant messaging terminal, according to an embodiment of the disclosure. In this embodiment, the second instant messaging terminal can be a PC, mobile phone, tablet PC, smartphone, e-reader, laptop computer, in-car terminal or any other network-enabled device. The second instant messaging terminal in the illustrated embodiment can include at least the following modules.

A terminal interacting module 510 that can interact, via an instant messaging application, with a first instant messaging terminal logged into a related account. In particular, the related account can be account of a friend of another member of the same group. It can also be the same account logged in at different instant messaging terminals. The terminal interacting module 510 can connect to the first instant messaging terminal directly or by routing information through a messaging server. For example, in this embodiment, when the first instant messaging terminal and the second instant messaging terminal discover each other in the same LAN, the terminal interacting module 510 can connect to the first instant messaging terminal directly to interact with each other.

The terminal-interacting module can include the following units.

A sharing request obtaining unit 511 that can obtain the data-sharing request transmitted from the first instant messaging terminal.

A reply transmitting unit 512 that can respond to the data-sharing request, and transmit a reply permitting data sharing to the first instant messaging terminal. The reply permitting data sharing can include an ID collection of one or more shareable data resources. The ID collection can include at least one data source ID. In particular, the sharing request obtaining unit 511, after receiving the data-sharing request, can display a message on a display of the second instant messaging terminal prompting whether or not to grant the data-sharing request. The reply transmitting unit 512 can respond to the data-sharing request based on a user input selection. If the user chooses to reject the request, the reply transmitting unit 512 can send a reply to the first instant messaging terminal rejecting the request. If the user chooses to allow data sharing, the reply transmitting unit 512 can send a reply to the first instant messaging terminal granting the request. The reply granting data sharing can include an ID collection of shareable data resources, which can include at least an ID of one data resource. The data resource ID can be an ID of a data resource at the second instant messaging terminal that can be shared with the first instant messaging terminal or any other terminals. The user can manually set a data resource, a type of data resources, or a folder of data resources as shareable data resources. The second instant messaging terminal can generate a corresponding data resource ID based on a shareable data resource. The data resource ID can be of a format including, for example, the name, abstract, attribute, or thumbnail associated with the data resource. The ID collection of shareable data resources can include a list including multiple data resource IDs.

A data request obtaining unit 513 that can obtain a data-sharing request transmitted from the first instant messaging terminal. The data-sharing request can include at least one of the data resource IDs. In particular, the first instant messaging terminal can display on its display the ID collection of the one or more shareable data resources in the reply, after receiving the reply transmitted from the reply transmitting unit 512, to prompt a user at the first instant messaging terminal to choose one or more of the data resources to obtain. After receiving the user's selection command, the first instant messaging terminal can transmit a data-sharing request to the second instant messaging terminal. The data request obtaining unit 513 can obtain the data-sharing request transmitted from the first instant messaging terminal. The request can include the at least one data resource ID selected by the user at the first instant messaging terminal.

A data transmitting unit 514 that can transmit, to the first instant messaging terminal, one or more data resources corresponding to the at least one data resource ID in the data-sharing request.

Optionally, the second instant messaging terminal of this embodiment can also include one or more of the following modules.

A gateway device information uploading module 520 that can upload the gateway device information of the second instant messaging terminal to the messaging server to allow the messaging server to determine whether, based on the gateway device information of the first and second instant messaging terminals, the first instant messaging terminal and the second instant messaging terminal can connection to each other directly. In particular, the gateway device information of the second instant messaging terminal can be unique identification information (e.g., an MAC address) of the gateway device (e.g., a router) on the LAN or a public IP address. The messaging server can determine based on the gateway device information whether the two terminals belong to the same LAN. If they do, it can be determined that the two terminals can connect directly to each other. When the first instant messaging terminal and the second instant messaging terminal can connect directly to each other, the terminal interacting module 510 can interact with the first instant messaging terminal directly. When the first instant messaging terminal and the second instant messaging terminal cannot connect directly, the terminal interacting module 510 can interact with the first instant messaging terminal by routing information through the messaging server.

Optionally, the second instant messaging terminal in this embodiment can include the following modules.

An operating status uploading module 530 that can transmit to the messaging server operating status information of the instant messaging application, which can allow the messaging server to determine whether the instant messaging application on the instant messaging terminal is running in the background. In operation, the operating status uploading module 530 can transmit to the messaging server the operating status information of its instant messaging application on a regular basis. Alternatively, it can also transmit the operating status information of its instant messaging application to the messaging server when there is a change to the operating status of the instant messaging application to notify the messaging server regarding the latest operating status.

The sharing request obtaining unit 511 can include the following units.

A push message obtaining unit that can obtain a second push message transmitted from the terminal management server based on a first push message transmitted from the messaging server to the terminal management server. The first push message and the second push message can both include the data-sharing request transmitted from the first instant messaging terminal. In one embodiment, the terminal management server associated with the second instant messaging terminal can be, for example, an Apple terminal management server. The messaging terminal can transmit the first push message including the data-sharing request to the Apple terminal management server, requesting the Apple terminal management server to wake up the second instant messaging terminal managed by the Apple terminal management server. Then, the terminal management server associated with the second instant messaging server can transmit, based on the first push message transmitted from the messaging server, a second push message including the data-sharing request to the second instant messaging terminal. The push message obtaining unit can receive the second push message transmitted from the terminal management server. The second instant messaging terminal can include, for example, an iPhone or iPad (i.e., smartphones and tablet PCs from Apple, both using iOS system).

An activation unit that can activate the instant messaging application in response to the second push message and obtain the data-sharing request in the second push message.

Optionally, the second instant messaging terminal can also include one or more of the following modules.

A resource ID obtaining module 540 that can obtain an ID collection of one or more shareable data resources based on the data resources designated t by the user as shareable data resources. The data resource ID can be an ID for a data resource at the second instant messaging terminal that is shareable with the first instant messaging terminal or all other terminals. The user can manually set a data resource, a type of data resources, or a folder of data resources as shareable data resources. The resource ID obtaining module 540 can generate a corresponding data resource ID based on a shareable data resource. The data resource ID can be of a format including, for example, the name, abstract, attribute, or thumbnail associated with the data resource. The ID collection of shareable data resources can include a list including multiple data resource IDs.

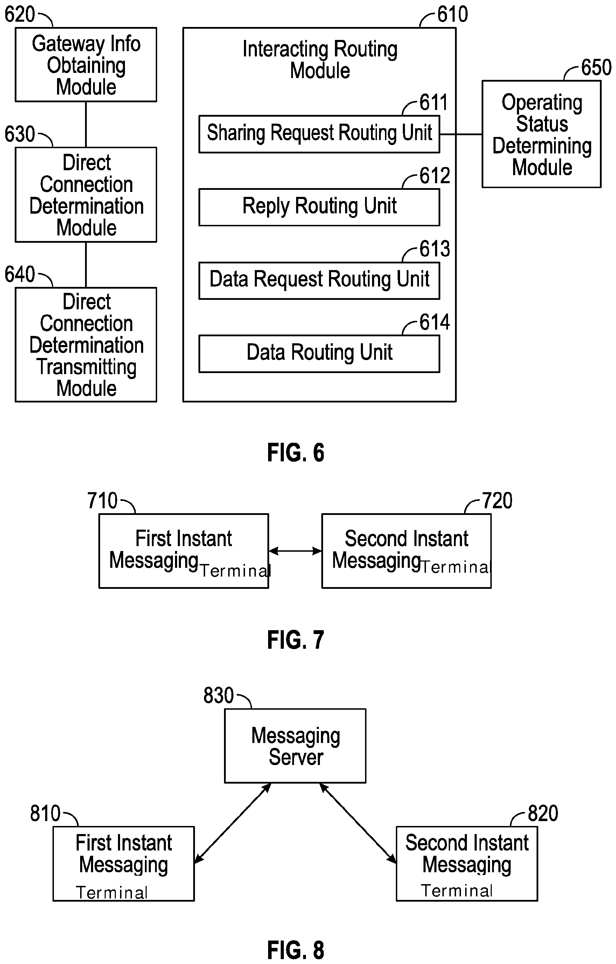

Fig. 6 is a block diagram illustrating an exemplary structure of the messaging server, according to an embodiment of the disclosure. The messaging server in the illustrated embodiment can include at least the following modules.

An interaction routing module 610 that can route information to facilitate the interactions between a first instant messaging terminal and a second instant messaging terminal logged into related accounts. The interaction routing module 610 can include the following units.

A sharing request routing unit 611 that can obtain the data-sharing request transmitted from the first instant messaging terminal and forward it to the second instant messaging terminal.

A reply routing unit 612 that can obtain a reply permitting data sharing from the second instant messaging terminal and forward it to the first instant messaging terminal. The reply permitting data sharing can include an ID collection of one or more shareable data resources. The ID collection of the shareable data resources can include at least one data resource ID.

A data request routing unit 613 that can obtain a data-reading request transmitted from a first instant messaging terminal and forward it to the second instant messaging terminal. The data-reading request can include at least one of the data resource IDs.

A data routing unit 614 that can obtain, from the second instant messaging terminal, a data resource corresponding to the data resource ID in the data-reading request and forward it to the first instant messaging terminal.

Optionally, the messaging server in this embodiment can also include the following modules.

A gateway device information obtaining module 620 that obtains the gateway device information uploaded by the first instant messaging terminal and the second instant messaging terminal. In operation, the first instant messaging terminal and the second instant messaging terminal can transmit their respective gateway device information to the messaging server on a regular basis via an instant messaging application after logging into their respective instant messaging accounts. The gateway device information can be unique identification information (e.g., an MAC address) of the gateway device (e.g., a router) on the LAN or a public IP address.

A direct connection determination module 630 that can determine whether the first instant messaging terminal and the second instant messaging terminal can connect directly based on the gateway device information of the first instant messaging terminal and the second instant messaging terminal. In operation, the direct connection determination module 630 can determine whether the two terminals belong to the same LAN based on their respective gateway device information. If they do, it can be determined that the two terminals can connect directly.

A direct connection determination transmitting module 640 that can transmit, to the first instant messaging terminal, the determination result of whether the first instant messaging terminal and the second instant messaging terminal can connect directly to each other, thereby allowing the first instant messaging terminal to choose whether to connect directly to the second instant messaging terminal or by routing information through the messaging server in order to interact with the second instant messaging terminal.

Optionally, the messaging server in this embodiment can also include the following modules.

An operating status determining module 650 that can obtain the operating status of the instant messaging application at the second instant messaging terminal and determine, based on the obtained operating status, whether the instant messaging application at the second instant messaging terminal is running in the background.

The sharing request routing unit 611 can further include the following units.

A routing request obtaining unit that can obtain the data-sharing request transmitted from the first instant messaging terminal and directed to the second instant messaging terminal.

A push message transmitting module that, when the operating status determining module 670 determines that the instant messaging application of the second instant messaging terminal is running in the background, can transmit a first push message including the data-sharing request to the terminal management server. This can allow the terminal management server to transmit a second push message including the data-sharing request to the second instant messaging terminal based on the first push message, and eventually allow the second instant messaging to activate the instant messaging application in response to the second push message and obtain the data-sharing request. The terminal management server associated with the second instant messaging terminal can be, for example, an Apple terminal management server. The push message transmitting unit can transmit the first push message including the data-sharing request to the Apple terminal management server based on the data-sharing request directed to the second instant messaging terminal and transmitted from the first instant messaging terminal, requesting the Apple terminal management server to wake up the second instant messaging terminal managed by the Apple terminal management server. Then, the terminal management server associated with the second instant messaging server can transmit, based on the first push message transmitted from the messaging server, a second push message including the data-sharing request to the second instant messaging terminal. Finally, the second instant messaging terminal can activate the instant messaging application based on the second push message and obtain the data-sharing request in the second push message. The second instant messaging terminal can include, for example, an iPhone or iPad.

Fig. 7 is a block diagram illustrating an exemplary structure of an instant messaging system for facilitating data sharing, according to an embodiment of the disclosure. The instant messaging system in the illustrated embodiment can include a first instant messaging terminal 710 and a second instant messaging terminal 720.

The first instant messaging terminal 710 can be the first instant messaging terminal described above in view of Fig. 4. It can be for transmitting a data-sharing request to the second instant messaging terminal 720 logged into a related account. After obtaining a reply permitting data sharing from the second instant messaging terminal 720, the first instant messaging terminal 710 can transmit a data-reading request to the second instant messaging terminal 720 based on the ID collection of the shareable data resources in the reply permitting data sharing, and obtain a data resource corresponding to the data resource ID in the data-reading request from the second instant messaging terminal 720.

The second instant messaging terminal 720 can be the second instant messaging terminal as described above in view of Fig. 5. It can be used for obtaining the data-sharing request from the first instant messaging terminal 710 and transmitting a reply permitting data sharing to the first instant messaging terminal 710. The reply can include an ID collection of one or more shareable data resources. It can also obtain the data-reading request transmitted from the first instant messaging terminal and transmit, to the first instant messaging terminal, one or more data resources corresponding to the at least one data resource ID in the data-reading request.

Fig. 8 is a block diagram illustrating an exemplary structure of the instant messaging system, according to another embodiment of the disclosure. The instant messaging system as illustrated in Fig. 8 can include, for example, a first instant messaging terminal 810, a second instant messaging terminal 820, and a messaging server 830.

The first instant messaging terminal 810 can transmit a data-sharing request through the messaging server 830 to the second instant messaging terminal 820 logged into the same instant messaging application. After obtaining a reply permitting data sharing from the second instant messaging terminal 820 through the messaging server 830, the first instant messaging terminal 810 can transmit, via the messaging server 830, a data-reading request to the second instant messaging terminal 820 based on the ID collection of the one or more shareable data resources in the reply. The first instant messaging terminal 810 can also obtain, via information routing by the messaging server 830, the data resource corresponding to the data resource ID in the data-reading request and transmitted from the second instant messaging terminal 820.

The second instant messaging terminal 820 can obtain the data-sharing request transmitted from the first instant messaging terminal 810 through the messaging server 830. It can transmit a reply permitting data share to the first instant messaging terminal 810 through the messaging server 830. The reply can include an ID collection of one or more shareable data resources. It can obtain the data-reading request transmitted from the first instant messaging terminal 810 through the messaging server 830. It can transmit, through the messaging server 830, one or more data resources corresponding to the at least data resource ID in the data-reading request to the first instant messaging terminal 710.

The messaging server 830 can be used for routing information to facilitate interactions between the first instant messaging terminal 810 and the second instant messaging terminal 820 logged into related accounts.

The embodiments of the disclosure can facilitate accessing and reading data resources through logging into related accounts of an instant messaging application, thereby making data sharing among multiple terminals easier and faster.

Based on the above-described embodiments, a person skilled in the art can understand that parts of or the whole process described in each of the above embodiments can be performed by hardware in accordance with instructions from one or more computer programs. The one or more computer programs can be stored in a non-transitory readable medium, and when executed, perform the processes described in these embodiments. The non-transitory computer readable medium can be a floppy disk, CD, read-only memory (ROM), or random access memory (RAM).

In some embodiments, one or more of the modules in Figs. 4-8 can be stored and/or transported within any non-transitory computer-readable storage medium for use by or in connection with an instruction execution system, apparatus, or device, such as a computer-based system, processor-containing system, or other system that can fetch the instructions from the instruction execution system, apparatus, or device and execute the instructions. In the context of this file, a "non-transitory computer-readable storage medium" can be any medium that can contain or store the program for use by or in connection with the instruction execution system, apparatus, or device. The non-transitory computer readable storage medium can include, but is not limited to, an electronic, magnetic, optical, electromagnetic, infrared, or semiconductor system, apparatus or device, a portable computer diskette (magnetic), a random access memory (RAM) (magnetic), a read-only memory (ROM) (magnetic), an erasable programmable read-only memory (EPROM) (magnetic), a portable optical disc such a CD, CD-R, CD-RW, DVD, DVD-R, or DVD-RW, or flash memory such as compact flash cards, secured digital cards, USB memory devices, memory sticks, and the like.

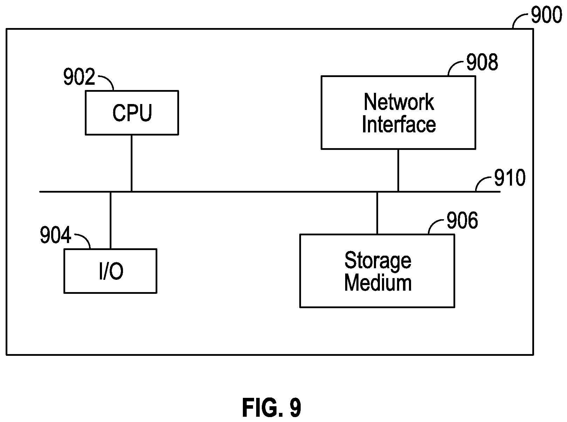

The non-transitory computer readable storage medium can be part of a computing system serving as the device control apparatus. Fig. 9 illustrates exemplary common components of one such computing system. As illustrated, the system 900 can include a central processing unit (CPU) 902, I/O components 904 including, but not limited to one or more of display, keypad, touch screen, speaker, and microphone, storage medium 906 such as the ones listed in the last paragraph, and network interface 908, all of which can be connected to each other via a system bus 910. The storage medium 906 can include the modules of Figs. 4-8 if the system is a device control apparatus in one of the embodiments discussed above.

Although embodiments of this disclosure have been fully described with
reference to the accompanying drawings, it is to be noted that various changes and
modifications will become apparent to those skilled in the art. Such changes and modifications are to be understood as being included within the scope of embodiments of
this disclosure as defined by the appended claims.

## Claims

1. A first instant messaging terminal (710, 810), comprising:
a terminal interacting module (410) that interacts, via an instant messaging application, with a second instant messaging terminal (720, 820) logged into a related account of the instant messaging application,
a gateway device information uploading module (420) that uploads gateway device information of the first instant messaging terminal (710, 810) to a messaging server (830), and
a direct connection determination obtaining module (430) that obtains a determination made by the messaging server (830) regarding whether the first instant messaging terminal (710, 810) and the second instant messaging terminal (720, 820) can connect directly to each other, the determination made based on the gateway device information of the first instant messaging terminal (710, 810) and the second instant messaging terminal (720, 820),
the first instant messaging terminal (710, 810) being connected to a local area network on which the gateway device is located,
the terminal interacting module (410) comprising:
a sharing request unit (411) that transmits a data-sharing request to the second instant messaging terminal (720, 820),
a response-obtaining unit (412) that obtains a response permitting data sharing transmitted from the second instant messaging terminal (720, 820), the response comprising an ID collection associated with at least one shareable data resources, the ID collection comprising at least one data resource ID,
a data-requesting unit (413) that transmits a data-reading request to the second instant messaging terminal (720, 820), the data-reading request comprising at least one data resource ID,
a data-obtaining unit (414) that obtains a data resource transmitted from the second instant messaging terminal (720, 820), the data resource corresponding to the data resource ID in the data-reading request.

2. The first instant messaging terminal (710, 810) of claim 1, wherein an interaction between the terminal interacting module (410) and the second instant messaging terminal (720, 820) via the instant messaging application can be direct or routed through the messaging server (830).

3. The first instant messaging terminal (710, 810) of claim 2, wherein:
when the first instant messaging terminal (710) can connect to the second instant messaging terminal (720) directly, the first instant messaging terminal (710) interacting with the second instant messaging terminal (720) directly,
when the first instant messaging terminal (810) cannot communicate with the second instant messaging terminal (820) directly, the first instant messaging terminal (810) interacting with the second instant messaging terminal (820) by routing information through the messaging server (830).

4. A second instant messaging terminal (720, 820), comprising:
a terminal-interacting module (510) that interacts, via an instant messaging application, with a first instant messaging terminal (710, 810) logged into a related account of the application; and
a gateway device information uploading module (520) that uploads the gateway device information of the second instant messaging terminal (720, 820) to a messaging server (830), to allow the messaging server (830) to determine, based on the gateway device information of the first instant messaging terminal (710, 810) and the second instant messaging terminal (720, 820), whether the first instant messaging terminal (710, 810) and the second instant messaging terminal (720, 820) can connect directly to each other,
the second instant messaging terminal (720, 820) being connected to a local area network on which the gateway device is located,
the terminal-interacting module (510) comprising:
a sharing request obtaining unit (511) that obtains a data-sharing request transmitted from the first instant messaging terminal (710, 810),
a reply transmitting unit (512) that responds to the data-sharing request and transmits a reply permitting data sharing to the first instant messaging terminal (710, 810), the reply comprising an ID collection of at least one shareable data resource, the ID collection of the at least one shareable data resource comprising at least one data resource ID,
a data request obtaining unit (513) that obtains a data-reading request transmitted from the first instant messaging terminal (710, 810), the data-reading request comprising at least one data resource ID,
a data transmitting unit (514) that transmits, to the first instant messaging terminal (710, 810), a data resource corresponding to the at least one data resource ID in the data-reading request.

5. The second instant messaging terminal (720, 820) of claim 4, wherein an interaction between the terminal-interacting module (510) and the first instant messaging terminal (710, 810) via the instant messaging application can be direct or routed through the messaging server (830).

6. The second instant messaging terminal (720, 820) of claim 5, wherein:
when the second instant messaging terminal (720) can connect to the first instant messaging terminal (710) directly, the terminal-interacting module (510) interacting with the first instant messaging terminal (710) directly,
when the second instant messaging terminal (820) cannot connect to the first instant messaging terminal (810) directly, the terminal interacting module (510) interacting with the first instant messaging terminal (810) by routing information through the messaging server (830).

7. The second instant messaging terminal (720, 820) of claim 6, comprising:
an operating status-transmitting module (530) that transmits status information of the instant messaging application to the messaging server (830), to allow the messaging server (830) to determine whether the instant messaging application at the second instant messaging terminal (720, 820) is running in the background,
the sharing request obtaining unit (511) comprising:
a push message obtaining unit that obtains a second push message transmitted by a terminal management server based on a first push message transmitted from the messaging server (830) to the terminal management server, the first push message and the second push message both comprising the data-sharing request transmitted from the first instant messaging terminal (710, 810),
an activation unit that activates the instant messaging application based on the second push message and obtains the data-sharing request in the second push message.

8. A messaging server (830) comprising:
an interaction-routing module (610) that routes information for facilitating interactions between the first instant messaging terminal (710, 810) and the second instant communication terminal (720, 820) logged into related accounts,
a gateway device information obtaining module (620) that obtains gateway device information uploaded by the first instant messaging terminal (710, 810) and the second instant messaging terminal (720, 820), and
a direct connection determination module (630) that determines, based on the gateway device information of the first instant messaging terminal (710, 810) and the second instant messaging terminal (720, 820), whether the first instant messaging terminal (710, 810) and the second instant messaging terminal (720, 820) can connect directly to each other,
each of the first instant messaging terminal (710, 810) and the second instant messaging terminal (720, 820) being connected to a local area network including a gateway device,
the interaction-routing module (610) comprising:
a sharing request routing unit (611) that forwards a data-sharing request transmitted from the first instant messaging terminal (710, 810) to the second instant messaging terminal (720, 820),
a reply routing unit (614) that obtains a reply permitting data sharing from the second instant messaging terminal (720, 820) and forwards the reply to the first instant messaging terminal (710, 810), the reply comprising an ID collection of at least one shareable data resource, the ID collection of the at least one shareable data resource comprising at least one data resource ID,
a data request routing unit (613) that obtains a data-reading request transmitted from the first instant messaging terminal (710, 810) and forwards the data-reading request to the second instant messaging terminal (720, 820), the data-reading request comprising at least one data resource ID,
a data routing unit (612) that obtains the data resource corresponding to the data resource ID in the data-reading request and transmitted from the second instant messaging terminal (720, 820) and forwards the data resource to the first instant messaging terminal (710, 810).

9. The messaging server (830) of claim 8, comprising:
a direct connection determination transmitting module (640) that transmits, to the first instant messaging terminal (710, 810), the determination of whether the first instant messaging terminal (710, 810) and the second instant messaging terminal (720, 820) can connect directly to each other.

10. The messaging server (830) of claim 8, comprising:
a status determination module (650) that obtains status information of the instant messaging application of the second instant messaging terminal (720, 820) and determines, based on the status information, whether the instant messaging application of the second instant messaging terminal (720, 820) is running in the background,
the data-sharing request routing unit (611) comprising:
a sharing request obtaining unit that obtains a data sharing request directed to the second instant messaging terminal (720, 820) and transmitted from the first instant messaging terminal (710, 810),
a push message transmitting unit that, when the status determination module (650) determines that the instant messaging application of the second instant messaging terminal (720, 820) is running in the background, transmits a first push message including the data-sharing request to a terminal management server, to allow the terminal management server to transmit a second push message including the data-sharing request to the second instant messaging terminal (720, 820), and to ultimately allow the second instant messaging terminal (720, 820) to activate the instant messaging application and obtain the data-sharing request from the second push message.

11. A data-requesting method executed on a first terminal (710, 810) comprising:
uploading (S201) gateway device information to a messaging server (830) supporting an instant messaging communication application,
obtaining (S204) from the messaging server (830) a determination, based on the gateway device information, whether the first terminal (710, 810) and the second terminal (720, 820) can connect directly to each other,
receiving a user input requesting data from a second terminal (720, 820) communicating with the first terminal (710, 810) via the instant messaging communication application,
transmitting, in response to the user input, a data-sharing request to the second terminal (720, 820) via the instant messaging communication application,
receiving, in response to the data-sharing request, via the instant messaging communication application from the second terminal (720, 820), a reply comprising at least one data resource ID corresponding to a data resource at the second terminal (720, 820),
transmitting, in response to the reply, via the instant messaging communication application to the second terminal (720, 820), a data-reading request to the second instant messaging terminal (720, 820), the data-reading request comprising at least one data resource ID, and
receiving, in response to the data-reading request, via the instant messaging communication application from the second terminal (720, 820), a data resource corresponding to the at least one data resource ID in the data-reading request,
wherein the first terminal (710, 810) is connected to a local area network on which the gateway device is located.

12. The method of claim 11, wherein the first terminal (710, 810) and the second terminal (720, 820) are logged into related accounts of the instant messaging application.

13. The method of claim 11, wherein:
when the first terminal (710) can connect to the second terminal (720) directly, the first terminal (710) interacting with the second terminal (720) directly,
when the first terminal (810) cannot communicate with the second terminal (820) directly, the first terminal (810) communicating with the second terminal (820) by routing information through the messaging server (830).

14. A data-sharing method executed by a second terminal (720, 820), comprising:
uploading gateway device information to a messaging server (830) supporting an instant messaging communication application,
obtaining from the messaging server (830) a determination whether the first terminal (710, 810) and the second terminal (720, 820) can connect directly to each other,
receiving a data-sharing request from a first terminal (710, 810) via the instant messaging communication application,
transmitting a reply to the first terminal (710, 810) via the instant messaging communication application in response to the data-sharing request, the reply comprising at least one shareable data resource ID corresponding to at least one data resource at the second terminal (720, 820),
receiving a data-reading request from the first terminal (710, 810) via the instant messaging communication application in response to transmitting the reply, the data-reading request comprising at least one data resource ID, and
transmitting to the first terminal (710, 810) via the instant messaging communication application a data resource corresponding to the at least one data resource ID in the data-reading request,
wherein the second terminal (720, 820) is connected to a local area network on which the gateway device is located.

15. The method of claim 14, wherein:
when the first terminal (710) can connect to the second terminal (720) directly, the first terminal (710) interacting with the second terminal (720) directly, and
when the first terminal (810) cannot communicate with the second terminal (820) directly, the first terminal (810) communicating with the second terminal (820) by routing information through the messaging server (830).

## Patentansprüche

1. Erstes Sofortnachrichtenübermittlungsendgerät (710, 810), Folgendes umfassend:
ein Endgerätinteraktionsmodul (410), das über eine Sofortnachrichtenübermittlungsanwendung mit einem zweiten Sofortnachrichtenübermittlungsendgerät (720, 820) interagiert, das in ein diesbezügliches Account der Sofortnachrichtenübermittlungsanwendung eingeloggt ist,
ein Gateway-Geräteinformationshochlademodul (420), das Gateway-Geräteinformationen des ersten Sofortnachrichtenübermittlungsendgeräts (710, 810) auf einen Nachrichtenübermittlungsserver (830) hochlädt, und
ein Direktverbindungsbestimmungseinholungsmodul (430), das eine durch den Nachrichtenübermittlungsserver (830) getroffene Bestimmung dahingehend einholt, ob das erste Sofortnachrichtenübermittlungsendgerät (710, 810) und das zweite Sofortnachrichtenübermittlungsendgerät (720, 820) sich direkt miteinander verbinden können, wobei die Bestimmung auf Grundlage der Gateway-Geräteinformation des ersten Sofortnachrichtenübermittlungsendgeräts (710, 810) und des zweiten Sofortnachrichtenübermittlungsendgeräts (720, 820) getroffen wird,
wobei das erste Sofortnachrichtenübermittlungsendgerät (710, 810) mit einem lokalen Netzwerk verbunden ist, in dem sich das Gateway-Gerät befindet,
wobei das Endgerätinteraktionsmodul (410) umfasst:
eine Mitbenutzungsanfrageeinheit (411), die eine Datenmitbenutzungsanfrage an das zweite Sofortnachrichtenübermittlungsendgerät (720, 820) überträgt,
eine Antworteinholungseinheit (412), die eine vom zweiten Sofortnachrichtenübermittlungsendgerät (720, 820) übertragene Antwort einholt, die eine Datenmitbenutzung erlaubt, wobei die Antwort eine ID-Kollektion umfasst, die mit mindestens einem mitbenutzbaren Datenbestand zusammenhängt, wobei die ID-Kollektion mindestens eine Datenbestands-ID umfasst,
eine Datenanfrageeinheit (413), die eine Datenausleseanfrage an das zweite Sofortnachrichtenübermittlungsendgerät (720, 820) überträgt, wobei die Datenausleseanfrage mindestens eine Datenbestands-ID umfasst,
eine Dateneinholungseinheit (414), die einen vom zweiten Sofortnachrichtenübermittlungsendgerät (720, 820) übertragenen Datenbestand einholt, wobei der Datenbestand der Datenbestands-ID in der Datenausleseanfrage entspricht.

2. Erstes Sofortnachrichtenübermittlungsendgerät (710, 810) nach Anspruch 1, wobei eine Interaktion zwischen dem Endgerätinteraktionsmodul (410) und dem zweiten Sofortnachrichtenübermittlungsendgerät (720, 820) über die Sofortnachrichtenübermittlungsanwendung direkt oder durch den Nachrichtenübermittlungsserver (830) geroutet sein kann.

3. Erstes Sofortnachrichtenübermittlungsendgerät (710, 810) nach Anspruch 2, wobei:
wenn sich das erste Sofortnachrichtenübermittlungsendgerät (710) direkt mit dem zweiten Sofortnachrichtenübermittlungsendgerät (720) verbinden kann, das erste Sofortnachrichtenübermittlungsendgerät (710) direkt mit dem zweiten Sofortnachrichtenübermittlungsendgerät (720) interagiert,
wenn das erste Sofortnachrichtenübermittlungsendgerät (810) nicht direkt mit dem zweiten Sofortnachrichtenübermittlungsendgerät (820) kommunizieren kann, das erste Sofortnachrichtenübermittlungsendgerät (810) mit dem zweiten Sofortnachrichtenübermittlungsendgerät (820) interagiert, indem Informationen durch den Nachrichtenübermittlungsserver (830) geroutet werden.

4. Zweites Sofortnachrichtenübermittlungsendgerät (720, 820), Folgendes umfassend:
ein Endgerätinteraktionsmodul (510), das über eine Sofortnachrichtenübermittlungsanwendung mit einem ersten Sofortnachrichtenübermittlungsendgerät (710, 810) interagiert, das in einen diesbezüglichen Account der Anwendung eingeloggt ist, und
ein Gateway-Geräteinformationshochlademodul (520), das die Gateway-Geräteinformationen des zweiten Sofortnachrichtenübermittlungsendgeräts (720, 820) auf einen Nachrichtenübermittlungsserver (830) hochlädt, um den Nachrichtenübermittlungsserver (830) auf Grundlage der Gateway-Geräteinformationen des ersten Sofortnachrichtenübermittlungsendgeräts (710, 810) und des zweiten Sofortnachrichtenübermittlungsendgeräts (720, 820) bestimmen zu lassen, ob sich das erste Sofortnachrichtenübermittlungsendgerät (710, 810) und das zweite Sofortnachrichtenübermittlungsendgerät (720, 820) direkt miteinander verbinden können,
wobei das zweite Sofortnachrichtenübermittlungsendgerät (720, 820) mit einem lokalen Netzwerk verbunden ist, in dem sich das Gateway-Gerät befindet,
wobei das Endgerätinteraktionsmodul (510) umfasst:
eine Mitbenutzungsanfrageeinholungseinheit (511), die eine vom ersten Sofortnachrichtenübermittlungsendgerät (710, 810) übertragene Datenmitbenutzungsanfrage erhält,
eine Antwortübertragungseinheit (512), die auf die Datenmitbenutzungsanfrage antwortet und eine Antwort, die eine Datenmitbenutzung erlaubt, an das erste Sofortnachrichtenübermittlungsendgerät (710, 810) überträgt, wobei die Antwort eine ID-Kollektion mindestens eines mitbenutzbaren Datenbestands umfasst, wobei die ID-Kollektion des einen mitbenutzbaren Datenbestands mindestens eine Datenbestands-ID umfasst,
eine Datenanfrageeinholungseinheit (513), die eine vom ersten Sofortnachrichtenübermittlungsendgerät (710, 810) her übertragene Datenausleseanfrage erhält, wobei die Datenausleseanfrage mindestens eine Datenbestands-ID umfasst,
eine Datenübertragungseinheit (514), die an das erste Sofortnachrichtenübermittlungsendgerät (710, 810) einen Datenbestand überträgt, der der mindestens einen Datenbestands-ID in der Datenausleseanfrage entspricht.

5. Zweites Sofortnachrichtenübermittlungsendgerät (720, 820) nach Anspruch 4, wobei eine Interaktion zwischen dem Endgerätinteraktionsmodul (510) und dem ersten Sofortnachrichtenübermittlungsendgerät (710, 810) über die Sofortnachrichtenübermittlungsanwendung direkt oder durch den Nachrichtenübermittlungsserver (830) geroutet sein kann.

6. Zweites Sofortnachrichtenübermittlungsendgerät (720, 820) nach Anspruch 5, wobei:
wenn sich das zweite Sofortnachrichtenübermittlungsendgerät (720) direkt mit dem ersten Sofortnachrichtenübermittlungsendgerät (710) verbinden kann, das Endgerätinteraktionsmodul (510) direkt mit dem ersten Sofortnachrichtenübermittlungsendgerät (710) interagiert,
wenn sich das zweite Sofortnachrichtenübermittlungsendgerät (820) nicht direkt mit dem ersten Sofortnachrichtenübermittlungsendgerät (810) verbinden kann, das Endgerätinteraktionsmodul (510) mit dem ersten Sofortnachrichtenübermittlungsendgerät (810) interagiert, indem Informationen durch den Nachrichtenübermittlungsserver (830) geroutet werden.

7. Zweites Sofortnachrichtenübermittlungsendgerät (720, 820) nach Anspruch 6, umfassend:
ein Betriebsstatusübertragungsmodul (530), das Statusinformationen der Sofortnachrichtenübermittlungsanwendung an den Nachrichtenübermittlungsserver (830) überträgt, um den Nachrichtenübermittlungsserver (830) bestimmen zu lassen, ob die Sofortnachrichtenübermittlungsanwendung am zweiten Sofortnachrichtenübermittlungsendgerät (720, 820) im Hintergrund läuft,
wobei die Mitbenutzungsanfrageeinholungseinheit (511) umfasst:
eine Push-Nachrichteinholungseinheit, die eine zweite Push-Nachricht einholt, die durch einen Endgerätverwaltungsserver auf Grundlage einer vom Nachrichtenübermittlungsserver (830) her an den Endgerätverwaltungsserver übertragenen ersten Push-Nachricht übertragen wurde, wobei sowohl die erste Push-Nachricht als auch die zweite Push-Nachricht die vom ersten Sofortnachrichtenübermittlungsendgerät (710, 810) her übertragene Datenmitbenutzungsanfrage umfasst,
eine Aktivierungseinheit, die die Sofortnachrichtenübermittlungsanwendung auf Grundlage der zweiten Push-Nachricht aktiviert und die Datenmitbenutzungsanfrage in der zweiten Push-Nachricht erhält.

8. Nachrichtenübermittlungsserver (830), umfassend:
ein Interaktionsroutingmodul (610), das Informationen routet, um Interaktionen zwischen dem ersten Sofortnachrichtenübermittlungsendgerät (710, 810) und dem zweiten Sofortnachrichtenübermittlungsendgerät (720, 820) zu erleichtern, die in diesbezügliche Accounts eingeloggt sind,
ein Gateway-Geräteinformationseinholungsmodul (620), das Gateway-Geräteinformationen einholt, die durch das erste Sofortnachrichtenübermittlungsendgerät (710, 810) und das zweite Sofortnachrichtenübermittlungsendgerät (720, 820) hochgeladen wurden, und
ein Direktverbindungsbestimmungsmodul (630), das auf Grundlage der Gateway-Geräteinformationen des ersten Sofortnachrichtenübermittlungsendgeräts (710, 810) und des zweiten Sofortnachrichtenübermittlungsendgeräts (720, 820) bestimmt, ob sich das erste Sofortnachrichtenübermittlungsendgerät (710, 810) und das zweite Sofortnachrichtenübermittlungsendgerät (720, 820) direkt miteinander verbinden können,
wobei das erste Sofortnachrichtenübermittlungsendgerät (710, 810) und das zweite Sofortnachrichtenübermittlungsendgerät (720, 820) jeweils mit einem lokalen Netzwerk verbunden sind, das ein Gateway-Gerät enthält,
wobei das Interaktionsroutingmodul (610) umfasst:
eine Mitbenutzungsanfrageroutingeinheit (611), die eine vom ersten Sofortnachrichtenübermittlungsendgerät (710, 810) her übertragene Datenmitbenutzungsanfrage zum zweiten Sofortnachrichtenübermittlungsendgerät (720, 820) weiterleitet,
eine Antwortroutingeinheit (614), die eine Antwort vom zweiten Sofortnachrichtenübermittlungsendgerät (720, 820) her erhält, die eine Datenmitbenutzung erlaubt, und die Antwort an das erste Sofortnachrichtenübermittlungsendgerät (710, 810) weiterleitet, wobei die Antwort eine ID-Kollektion mindestens eines mitbenutzbaren Datenbestands umfasst, wobei die ID-Kollektion des mindestens einen mitbenutzbaren Datenbestands mindestens eine Datenbestands-ID umfasst,
eine Datenanfrageroutingeinheit (613), die eine vom ersten Sofortnachrichtenübermittlungsendgerät (710, 810) her übertragene Datenausleseanfrage erhält und die Datenausleseanfrage an das zweite Sofortnachrichtenübermittlungsendgerät (720, 820) weiterleitet, wobei die Datenausleseanfrage mindestens eine Datenbestands-ID umfasst,
eine Datenroutingeinheit (612), die den Datenbestand, der der Datenbestands-ID in der Datenausleseanfrage entspricht und vom zweiten Sofortnachrichtenübermittlungsendgerät (720, 820) her übertragen wurde, erhält und den Datenbestand an das erste Sofortnachrichtenübermittlungsendgerät (710, 810) weiterleitet.

9. Nachrichtenübermittlungsserver (830) nach Anspruch 8, umfassend:
ein Direktverbindungsbestimmungsübertragungsmodul (640), das an das erste Sofortnachrichtenübermittlungsendgerät (710, 810) die Bestimmung überträgt, ob sich das erste Sofortnachrichtenübermittlungsendgerät (710, 810) und das zweite Sofortnachrichtenübermittlungsendgerät (720, 820) direkt miteinander verbinden können.

10. Nachrichtenübermittlungsserver (830) nach Anspruch 8, umfassend:
ein Statusbestimmungsmodul (650), das Statusinformationen der Sofortnachrichtenübermittlungsanwendung des zweiten Sofortnachrichtenübermittlungsendgeräts (720, 820) einholt und auf Grundlage der Statusinformationen bestimmt, ob die Sofortnachrichtenübermittlungsanwendung des zweiten Sofortnachrichtenübermittlungsendgeräts (720, 820) im Hintergrund läuft,
wobei die Datenmitbenutzungsanfrageroutingeinheit (611) umfasst:
eine Mitbenutzungsanfrageinholungseinheit, die eine Datenmitbenutzungsanfrage erhält, die an das zweite Sofortnachrichtenübermittlungsendgerät (720, 820) gerichtet ist und vom ersten Sofortnachrichtenübermittlungsendgerät (710, 810) her übertragen wurde,
eine Push-Nachrichtübertragungseinheit, die, wenn das Statusbestimmungsmodul (650) bestimmt, dass die Sofortnachrichtenübermittlungsanwendung des zweiten Sofortnachrichtenübermittlungsendgeräts (720, 820) im Hintergrund läuft, eine erste Push-Nachricht, die die Datenmitbenutzungsanfrage umfasst, an einen Endgerätverwaltungsserver überträgt, um den Endgerätverwaltungsserver eine zweite Push-Nachricht, die die Datenmitbenutzungsanfrage umfasst, an das zweite Sofortnachrichtenübermittlungsendgerät (720, 820) übertragen zu lassen, und schließlich das zweite Sofortnachrichtenübermittlungsendgerät (720, 820) die Sofortnachrichtenübermittlungsanwendung aktivieren und die Datenmitbenutzungsanfrage aus der zweiten Push-Nachricht einholen zu lassen.

11. Datenabfrageverfahren, das auf einem ersten Endgerät (710, 810) ausgeführt wird, Folgendes umfassend:
Hochladen (S201) von Gateway-Geräteinformationen auf einen Nachrichtenübermittlungsserver (830), der eine Sofortnachrichtenübermittlungskommunikationsanwendung unterstützt,
Einholen (S204) vom Nachrichtenübermittlungsserver (830) her einer Bestimmung auf Grundlage der Gateway-Geräteinformationen, ob sich das erste Endgerät (710, 810) und das zweite Endgerät (720, 820) direkt miteinander verbinden können,
Empfangen einer Benutzereingabe, die Daten aus einem zweiten Endgerät (720, 820) abfragt, das mit dem ersten Endgerät (710, 810) über die Sofortnachrichtenübermittlungskommunikationsanwendung kommuniziert,
Übertragen, im Ansprechen auf die Benutzereingabe, einer Datenmitbenutzungsanfrage an das zweite Endgerät (720, 820) über die Sofortnachrichtenübermittlungskommunikationsanwendung,
Empfangen, im Ansprechen auf die Datenmitbenutzungsanfrage, über die Sofortnachrichtenübermittlungskommunikationsanwendung vom zweiten Endgerät (720, 820) her einer Antwort, die mindestens eine Datenbestands-ID umfasst, die einem Datenbestand am zweiten Endgerät (720, 820) entspricht,
Übertragen, im Ansprechen auf die Antwort, über die Sofortnachrichtenübermittlungskommunikationsanwendung an das zweite Sofortnachrichtenübermittlungsendgerät (720, 820) einer Datenausleseanfrage an das zweite Endgerät (720, 820), wobei die Datenausleseanfrage mindestens eine Datenbestands-ID umfasst, und
Empfangen, im Ansprechen auf die Datenausleseanfrage, über die Sofortnachrichtenübermittlungskommunikationsanwendung vom zweiten Endgerät (720, 820) her eines Datenbestands, der der mindestens einen Datenbestands-ID in der Datenausleseanfrage entspricht,
wobei das erste Endgerät (710, 810) mit einem lokalen Netzwerk verbunden ist, in dem sich das Gateway-Gerät befindet.

12. Verfahren nach Anspruch 11, wobei das erste Endgerät (710, 810) und das zweite Endgerät (720, 820) in diesbezügliche Accounts der Sofortnachrichtenübermittlungsanwendung eingeloggt sind.

13. Verfahren nach Anspruch 11, wobei:
wenn sich das erste Endgerät (710) direkt mit dem zweiten Endgerät (720) verbinden kann, das erste Endgerät (710) direkt mit dem zweiten Endgerät (720) interagiert,
wenn das erste Endgerät (810) nicht direkt mit dem zweiten Endgerät (820) kommunizieren kann, das erste Endgerät (810) mit dem zweiten Endgerät (820) kommuniziert, indem Informationen durch den Nachrichtenübermittlungsserver (830) geroutet werden.

14. Datenmitbenutzungsverfahren, das durch ein zweites Endgerät (720, 820) ausgeführt wird, Folgendes umfassend:
Hochladen von Gateway-Geräteinformationen auf einen Nachrichtenübermittlungsserver (830), der eine Sofortnachrichtenübermittlungskommunikationsanwendung unterstützt,
Einholen vom Nachrichtenübermittlungsserver (830) her einer Bestimmung, ob sich das erste Endgerät (710, 810) und das zweite Endgerät (720, 820) direkt miteinander verbinden können,
Empfangen einer Datenmitbenutzungsanfrage von einem ersten Endgerät (710, 810) her über die Sofortnachrichtenübermittlungskommunikationsanwendung,
Übertragen einer Antwort an das erste Endgerät (710, 810) über die Sofortnachrichtenübermittlungskommunikationsanwendung im Ansprechen auf die Datenmitbenutzungsanfrage, wobei die Antwort mindestens eine mitbenutzbare Datenbestands-ID umfasst, die dem mindestens einen Datenbestand am zweiten Endgerät (720, 820) entspricht,
Empfangen einer Datenausleseanfrage vom ersten Endgerät (710, 810) her über die Sofortnachrichtenübermittlungskommunikationsanwendung im Ansprechen auf das Übertragen der Antwort, wobei die Datenausleseanfrage mindestens eine Datenbestands-ID umfasst, und
Übertragen an das erste Endgerät (710, 810) über die Sofortnachrichtenübermittlungskommunikationsanwendung eines Datenbestands, der der mindestens einen Datenbestands-ID in der Datenausleseanfrage entspricht,
wobei das zweite Endgerät (720, 820) mit einem lokalen Netzwerk verbunden ist, in dem sich das Gateway-Gerät befindet.

15. Verfahren nach Anspruch 14, wobei:
wenn sich das erste Endgerät (710) direkt mit dem zweiten Endgerät (720) verbinden kann, das erste Endgerät (710) direkt mit dem zweiten Endgerät (720) interagiert, und
wenn das erste Endgerät (810) nicht direkt mit dem zweiten Endgerät (820) kommunizieren kann, das erste Endgerät (810) mit dem zweiten Endgerät (820) kommuniziert, indem Informationen durch den Nachrichtenübermittlungsserver (830) geroutet werden.

## Revendications

1. Premier terminal de messagerie instantanée (710, 810), comprenant :
un module d'interaction de terminaux (410) qui interagit via une application de messagerie instantanée avec un deuxième terminal de messagerie instantanée (720, 820) enregistré dans un compte relatif de l'application de messagerie instantanée,
un module de téléchargement d'informations de dispositif de passerelle (420) qui télécharge des informations de dispositif de passerelle du premier terminal de messagerie instantanée (710, 810) vers un serveur de messagerie (830),
et
un module d'obtention de détermination de connexion directe (430) qui obtient une détermination faite par le serveur de messagerie (830) concernant le fait de savoir si le premier terminal de messagerie instantanée (710, 810) et le deuxième terminal de messagerie instantanée (720, 820) peuvent se connecter directement l'un à l'autre, la détermination étant faite sur la base des informations de dispositif de passerelle du premier terminal de messagerie instantanée (710, 810) et du deuxième terminal de messagerie instantanée (720, 820),
le premier terminal de messagerie instantanée (710, 810) étant connecté à un réseau local sur lequel le dispositif de passerelle est situé,
le module d'interaction de terminaux (410) comprenant :
une unité de demande de partage (411) qui transmet une demande de partage de données au deuxième terminal de messagerie instantanée (720, 820),
une unité d'obtention de réponse (412) qui obtient une réponse permettant le partage de données transmis depuis le deuxième terminal de messagerie instantanée (720, 820), la réponse comprenant un ensemble d'ID associé à au moins une ressource de données partageable, l'ensemble d'ID comprenant au moins un ID de ressource de données,
une unité de demande de données (413) qui transmet une demande de lecture de données au deuxième terminal de messagerie instantanée (720, 820), la demande de lecture de données comprenant au moins un ID de ressource de données,
une unité d'obtention de données (414) qui obtient une ressource de données transmise depuis le deuxième terminal de messagerie instantanée (720, 820), la ressource de données correspondant à l'ID de ressource de données dans la demande de lecture de données.

2. Le premier terminal de messagerie instantanée (710, 810) de la revendication 1, sachant qu'une interaction entre le module d'interaction de terminaux (410) et le deuxième terminal de messagerie instantanée (720, 820) via l'application de messagerie instantanée peut être directe ou acheminée via le serveur de messagerie (830).

3. Le premier terminal de messagerie instantanée (710, 810) de la revendication 2, sachant que :
lorsque le premier terminal de messagerie instantanée (710) peut se connecter directement au deuxième terminal de messagerie instantanée (720), le premier terminal de messagerie instantanée (710) interagit directement avec le deuxième terminal de messagerie instantanée (720),
lorsque le premier terminal de messagerie instantanée (810) ne peut pas communiquer directement avec le deuxième terminal de messagerie instantanée (820), le premier terminal de messagerie instantanée (810) interagit avec le deuxième terminal de messagerie instantanée (820) en acheminant des informations via le serveur de messagerie (830).

4. Deuxième terminal de messagerie instantanée (720, 820), comprenant :
un module d'interaction de terminaux (510) qui interagit, via une application de messagerie instantanée, avec un premier terminal de messagerie instantanée (710, 810) enregistré dans un compte relatif de l'application ; et
un module de téléchargement d'informations de dispositif de passerelle (520) qui télécharge les informations de dispositif de passerelle du deuxième terminal de messagerie instantanée (720, 820) vers un serveur de messagerie (830) pour permettre au serveur de messagerie (830) de déterminer, sur la base des informations de dispositif de passerelle du premier terminal de messagerie instantanée (710, 810) et du deuxième terminal de messagerie instantanée (720, 820), si le premier terminal de messagerie instantanée (710, 810) et le deuxième terminal de messagerie instantanée (720, 820) peuvent se connecter directement l'un à l'autre,
le deuxième terminal de messagerie instantanée (720, 820) étant connecté à un réseau local sur lequel le dispositif de passerelle est situé,
le module d'interaction de terminaux (510) comprenant :
une unité d'obtention de demande de partage (511) qui obtient une demande de partage de données transmise depuis le premier terminal de messagerie instantanée (710, 810),
une unité de transmission de réponse (512) qui répond à la demande de partage de données et transmet une réponse permettant le partage de données au premier terminal de messagerie instantanée (710, 810), la réponse comprenant un ensemble d'ID d'au moins une ressource de données partageable, l'ensemble d'ID de l'au moins une ressource de données partageable comprenant au moins un ID de ressource de données,
une unité d'obtention de demande de données (513) qui obtient une demande de lecture de données transmise depuis le premier terminal de messagerie instantanée (710, 810), la demande de lecture de données comprenant au moins un ID de ressource de données,
une unité de transmission de données (514) qui transmet au premier terminal de messagerie instantanée (710, 810) une ressource de données correspondant à l'au moins un ID de ressource de données dans la demande de lecture de données.

5. Le deuxième terminal de messagerie instantanée (720, 820) de la revendication 4, sachant qu'une interaction entre le module d'interaction de terminaux (510) et le premier terminal de messagerie instantanée (710, 810) via l'application de messagerie instantanée peut être directe ou acheminée via le serveur de messagerie (830).

6. Le deuxième terminal de messagerie instantanée (720, 820) de la revendication 5, sachant que :
lorsque le deuxième terminal de messagerie instantanée (720) peut se connecter directement au premier terminal de messagerie instantanée (710), le module d'interaction de terminaux (510) interagit directement avec le premier terminal de messagerie instantanée (710),
lorsque le deuxième terminal de messagerie instantanée (820) ne peut pas se connecter directement au premier terminal de messagerie instantanée (810), le module d'interaction de terminaux (510) interagit avec le premier terminal de messagerie instantanée (810) en acheminant des informations via le serveur de messagerie (830).

7. Le deuxième terminal de messagerie instantanée (720, 820) de la revendication 6, comprenant :
un module de transmission d'état de fonctionnement (530) qui transmet des informations d'état de l'application de messagerie instantanée au serveur de messagerie (830) pour permettre au serveur de messagerie (830) de déterminer si l'application de messagerie instantanée au niveau du deuxième terminal de messagerie instantanée (720, 820) est exécutée en arrière-plan,
l'unité d'obtention de demande de partage (511) comprenant :
une unité d'obtention de message push qui obtient un deuxième message push transmis par un serveur de gestion de terminaux sur la base d'un premier message push transmis depuis le serveur de messagerie (830) au serveur de gestion de terminaux, le premier message push et le deuxième message push comprenant tous deux la demande de partage de données transmise depuis le premier terminal de messagerie instantanée (710, 810),
une unité d'activation qui active l'application de messagerie instantanée sur la base du deuxième message push et obtient la demande de partage de données dans le deuxième message push.

8. Serveur de messagerie (830) comprenant :
un module d'acheminement d'interaction (610) qui achemine des informations destinées à faciliter des interactions entre le premier terminal de messagerie instantanée (710, 810) et le deuxième terminal de messagerie instantanée (720, 820) enregistrés dans des comptes relatifs,
un module d'obtention d'informations de dispositif de passerelle (620) qui obtient des informations de dispositif de passerelle téléchargées par le premier terminal de messagerie instantanée (710, 810) et le deuxième terminal de messagerie instantanée (720, 820), et
un module de détermination de connexion directe (630) qui détermine, sur la base des informations de dispositif de passerelle du premier terminal de messagerie instantanée (710, 810) et du deuxième terminal de messagerie instantanée (720, 820), si le premier terminal de messagerie instantanée (710, 810) et le deuxième terminal de messagerie instantanée (720, 820) peuvent se connecter directement l'un à l'autre, chacun du premier terminal de messagerie instantanée (710, 810) et du deuxième terminal de messagerie instantanée (720, 820) étant connecté à un réseau local incluant un dispositif de passerelle,
le module d'acheminement d'interaction (610) comprenant :
une unité d'acheminement de demande de partage (611) qui transfère une demande de partage de données transmise depuis le premier terminal de messagerie instantanée (710, 810) au deuxième terminal de messagerie instantanée (720, 820),
une unité d'acheminement de réponse (614) qui obtient une réponse permettant le partage de données depuis le deuxième terminal de messagerie instantanée (720, 820) et transfère la réponse au premier terminal de messagerie instantanée (710, 810), la réponse comprenant un ensemble d'ID d'au moins une ressource de données partageable, l'ensemble d'ID de l'au moins une ressource de données partageable comprenant au moins un ID de ressource de données,
une unité d'acheminement de demande de données (613) qui obtient une demande de lecture de données transmise depuis le premier terminal de messagerie instantanée (710, 810) et transfère la demande de lecture de données au deuxième terminal de messagerie instantanée (720, 820), la demande de lecture de données comprenant au moins un ID de ressource de données,
une unité d'acheminement de données (612) qui obtient la ressource de données correspondant à l'ID de ressource de données dans la demande de lecture de données et transmise depuis le deuxième terminal de messagerie instantanée (720, 820) et transfère la ressource de données au premier terminal de messagerie instantanée (710, 810).

9. Le serveur de messagerie (830) de la revendication 8, comprenant :
un module de transmission de détermination de connexion directe (640) qui transmet au premier terminal de messagerie instantanée (710, 810) la détermination du fait de savoir si le premier terminal de messagerie instantanée (710, 810) et le deuxième terminal de messagerie instantanée (720, 820) peuvent se connecter directement l'un à l'autre.

10. Le serveur de messagerie (830) de la revendication 8, comprenant :
un module de détermination d'état (650) qui obtient des informations d'état de l'application de messagerie instantanée du deuxième terminal de messagerie instantanée (720, 820) et détermine, sur la base des informations d'état, si l'application de messagerie instantanée du deuxième terminal de messagerie instantanée (720, 820) est exécutée en arrière-plan,
l'unité d'acheminement de demande de partage de données (611) comprenant :
une unité d'obtention de demande de partage qui obtient une demande de partage de données dirigée vers le deuxième terminal de messagerie instantanée (720, 820) et transmise depuis le premier terminal de messagerie instantanée (710, 810),
une unité de transmission de messages push qui, lorsque le module de détermination d'état (650) détermine que l'application de messagerie instantanée du deuxième terminal de messagerie instantanée (720, 820) est exécutée en arrière-plan, transmet un premier message push incluant la demande de partage de données à un serveur de gestion de terminaux pour permettre au serveur de gestion de terminaux de transmettre un deuxième message push incluant la demande de partage de données au deuxième terminal de messagerie instantanée (720, 820) et pour permettre finalement au deuxième terminal de messagerie instantanée (720, 820) d'activer l'application de messagerie instantanée et d'obtenir la demande de partage de données depuis le deuxième message push.

11. Procédé de demande de données exécuté sur un premier terminal (710, 810) comprenant :
le téléchargement (S201) d'informations de dispositif de passerelle vers un serveur de messagerie (830) prenant en charge une application de communication par messagerie instantanée,
l'obtention (S204) depuis le serveur de messagerie (830) d'une détermination, sur la base des informations de dispositif de passerelle, du fait de savoir si le premier terminal (710, 810) et le deuxième terminal (720, 820) peuvent se connecter directement l'un à l'autre,
la réception d'une entrée d'utilisateur demandant des données depuis un deuxième terminal (720, 820) communiquant avec le premier terminal (710, 810) via l'application de communication par messagerie instantanée,
la transmission, en réponse à l'entrée d'utilisateur, d'une demande de partage de données au deuxième terminal (720, 820) via l'application de communication par messagerie instantanée,
la réception, en réponse à la demande de partage de données, via l'application de communication par messagerie instantanée, depuis le deuxième terminal (720, 820), d'une réponse comprenant au moins un ID de ressource de données correspondant à une ressource de données au niveau du deuxième terminal (720, 820),
la transmission, en réponse à la réponse, via l'application de communication par messagerie instantanée, au deuxième terminal (720, 820) d'une demande de lecture de données au deuxième terminal de messagerie instantanée (720, 820), la demande de lecture de données comprenant au moins un ID de ressource de données, et
la réception, en réponse à la demande de lecture de données, via l'application de communication par messagerie instantanée, depuis le deuxième terminal (720, 820), d'une ressource de données correspondant à l'au moins un ID de ressource de données dans la demande de lecture de données,
sachant que le premier terminal (710, 810) est connecté à un réseau local sur lequel le dispositif de passerelle est situé.

12. Le procédé de la revendication 11, sachant que le premier terminal (710, 810) et le deuxième terminal (720, 820) sont enregistrés dans des comptes relatifs de l'application de messagerie instantanée.

13. Le procédé de la revendication 11, sachant que :
lorsque le premier terminal (710) peut se connecter directement au deuxième terminal (720), le premier terminal (710) interagit directement avec le deuxième terminal (720),
lorsque le premier terminal (810) ne peut pas communiquer directement avec le deuxième terminal (820), le premier terminal (810) communique avec le deuxième terminal (820) en acheminant des informations via le serveur de messagerie (830).

14. Procédé de partage de données exécuté par un deuxième terminal (720, 820), comprenant :
le téléchargement d'informations de dispositif de passerelle vers un serveur de messagerie (830) prenant en charge une application de communication par messagerie instantanée,
l'obtention depuis le serveur de messagerie (830) d'une détermination du fait de savoir si le premier terminal (710, 810) et le deuxième terminal (720, 820) peuvent se connecter directement l'un à l'autre,
la réception d'une demande de partage de données depuis un premier terminal (710, 810) via l'application de communication par messagerie instantanée,
la transmission d'une réponse au premier terminal (710, 810) via l'application de communication par messagerie instantanée en réponse à la demande de partage de données, la réponse comprenant au moins un ID de ressource de données partageable correspondant à au moins une ressource de données au niveau du deuxième terminal (720, 820),
la réception d'une demande de lecture de données depuis le premier terminal (710, 810) via l'application de communication par messagerie instantanée en réponse à la transmission de la réponse, la demande de lecture de données comprenant au moins un ID de ressource de données, et
la transmission au premier terminal (710, 810) via l'application de communication par messagerie instantanée d'une ressource de données correspondant à l'au moins un ID de ressource de données dans la demande de lecture de données,
sachant que le deuxième terminal (720, 820) est connecté à un réseau local sur lequel le dispositif de passerelle est situé.

15. Le procédé de la revendication 14, sachant que :
lorsque le premier terminal (710) peut se connecter directement au deuxième terminal (720), le premier terminal (710) interagit directement avec le deuxième terminal (720), et
lorsque le premier terminal (810) ne peut pas communiquer directement avec le deuxième terminal (820), le premier terminal (810) communique avec le deuxième terminal (820) en acheminant des informations via le serveur de messagerie (830).
